(19) Europäisches Patentamt
European Patent Office
Office européen des brevets

(11) **EP 3 599 583 A1**

(12) **EUROPÄISCHE PATENTANMELDUNG**

(43) Veröffentlichungstag:
**29.01.2020   Patentblatt 2020/05**

(51) Int Cl.:
***G06Q 50/06*** *(2012.01)*    ***G06Q 10/04*** *(2012.01)*
***H04L 12/28*** *(2006.01)*    ***G05D 23/19*** *(2006.01)*
***G01K 17/06*** *(2006.01)*

(21) Anmeldenummer: **18185735.0**

(22) Anmeldetag: **26.07.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Aufhauser, Daniel**
**3130 Herzogenburg (AT)**

• **Diwold, Konrad**
**1180 Wien (AT)**
• **Krammer, Lukas**
**1220 Wien (AT)**
• **Lechner, Daniel**
**2170 Poysdorf (AT)**

(74) Vertreter: **Maier, Daniel Oliver**
**Siemens AG**
**Postfach 22 16 34**
**80506 München (DE)**

(54) **BESTIMMUNG DES VERBRAUCHS AN HEIZ- ODER KÜHLENERGIE EINER BAULICHEN UNTEREINHEIT**

(57)    Die Erfindung betrifft ein Verfahren zur Bestimmung des Verbrauchs an Heiz- oder Kühlenergie von zumindest einer baulichen Untereinheit einer größeren baulichen Einheit, möglichst ohne Einbau zusätzlicher Messgeräte. Dabei ist vorgesehen, dass erstens
- die Heiz- oder Kühlleistung der Einheit über die Zeit bestimmt wird,

- sowie der Zeitpunkt (t1, t2) der Schaltereignisse mehrerer Untereinheiten (R1), wobei die Schaltereignisse die Zufuhr von Heiz- oder Kühlmedium betreffen,
- sowie die Innentemperatur dieser Untereinheiten (R1), und dass zweitens der Verbrauch an Heiz- oder Kühlenergie (P(t)) für zumindest eine dieser Untereinheiten (R1) auf Basis dieser Daten bestimmt wird.

FIG 2

EP 3 599 583 A1

**Beschreibung**

GEBIET DER ERFINDUNG

Die Erfindung betrifft ein Verfahren zur Bestimmung des Verbrauchs an Heiz- oder Kühlenergie von zumindest einer baulichen Untereinheit einer größeren baulichen Einheit. Die größere bauliche Einheit kann ein Gebäude sein, die Untereinheiten können einzelne Gebäudebereiche, wie Stockwerke, Wohnungen, Abteilungen, Stiegenhäuser, Zimmer, sein, aber auch einzelne Wärmeabgabeeinheiten, wie einzelne Heizkörper, oder einzelne Einheiten von Fußbodenheizungen. Die größere bauliche Einheit kann aber auch aus mehreren Gebäuden bestehen, wobei ein einzelnes Gebäude eine Untereinheit bildet, oder wobei die oben genannten Gebäudebereiche Untereinheiten bilden.

Die größere bauliche Einheit ist in der Regel dadurch definiert, dass der Verbrauch an Heiz- oder Kühlenergie als Gesamtverbrauch der Einheit bekannt ist.

Der Verbrauch an Heiz- oder Kühlenergie kann in Form eines Energiewerts oder eines Leistungswerts angegeben werden.

STAND DER TECHNIK

Der Energieverbrauch von Gebäuden, insbesondere deren Heizenergieverbrauch, kann bei Neubauten von Beginn an durch entsprechende Maßnahmen reduziert werden. Bei Bestandsgebäuden ist die Optimierung des Heizenergieverbrauchs entsprechend aufwändig. Einen Beitrag zur Reduktion des Heizenergieverbrauchs können Energiemonitoring-Systeme liefern. Durch solche Systeme ist es möglich, den Verbrauch eines Gebäudes zu erfassen und ein etwaiges atypisches Energieverhalten, wie geöffnete Fenster während des Heizens, zu erkennen und zu beheben.

Energiemonitoring-Systeme bedürfen vieler Komponenten, wie Sensoren und Messgeräte sowie Datenerfassungs- und Übertragungsgeräte, die nachträglich in ein Gebäude, genauer an bzw. in dessen Energiesystem, eingebaut werden müssten, was oft nur schwer oder gar nicht möglich ist. Zwar gibt es für bestehende Gebäude meist Energiezähler zur Bestimmung von verbrauchter Energie. Diese Information wird aber in der Regel nicht in Echtzeit verwendet, sondern in größeren regelmäßigen Abständen, z.B. monatlich, ausgelesen und in Berichte und für Monitoring, Verrechnung, Vorhersage von Wartungen oder Ähnlichem verwendet. Trotz oftmals vorhandenem Automationssystem zur Regelung der Raumtemperatur ist oft nur ein Energiezähler pro Gebäude oder Gebäudeteil vorgesehen. Somit kann keine Aussage zu Untereinheiten, wie einzelnen Wohnungen, Zimmern oder einzelnen Heizkörpern, eines Gebäudes getroffen werden.

Die Bestimmung des Energieverbrauchs von einzelnen Gebäudebereichen würde eine schnelle Fehlerlokalisierung ermöglichen und in der Folge zur Einhaltung oder Steigerung der Energieeffizienz eines Gebäudes wesentlich beitragen.

Derzeit sind keine Berechnungsmethoden bekannt, um aus dem gesamten Heizenergieverbrauch (Summenverbrauch) eines Gebäudes in Kombination mit Betriebsdaten aus einem Automationssystem (insbesondere Raumtemperaturregler) verlässlich den Heizenergieverbrauch (Einzelverbrauch) einer Untereinheit zu bestimmen. Ist es notwendig, die Einzelverbräuche zu bestimmen, so muss nach derzeitigem Stand der Technik die Messanlage entsprechend erweitert werden, indem zusätzliche Energiezähler für die einzelnen Untereinheiten eingebaut werden. Dies ist mit hohem technischen Aufwand verbunden: die bestehende Heizungsanlage muss außer Betrieb genommen werden, die Heizungsrohre müssen aufgeschnitten, die Energiezähler müssen eingebaut und die Heizungsanlage muss wieder abgedichtet werden. Dies kann mit einem Gewährleistungsverlust gegenüber dem ursprünglichen Ersteller der Heizungsanlage einhergehen. Entsprechendes gilt in gleicher Weise auch für den Kühlenergieverbrauch.

Eine andere bekannte Möglichkeit zur Bestimmung von Einzelverbräuchen ist die genaue Vermessung von einzelnen Gebäudeteilen, welche dann als Referenz herangezogen werden. Das bedeutet, einzelne Gebäudeteile oder Wohnungen werden mit Messtechnik ausgestattet, um den Heiz- bzw. Kühlenergieverbrauch direkt zu erfassen. Diese erfassten Werte werden dann anhand von im Voraus berechneten Verteilungsschlüsseln auf andere Gebäudeteile angewendet, um eine grobe Abschätzung des dortigen Heiz- bzw. Kühlenergieverbrauchs zu erhalten. Aufgrund unterschiedlicher Gegebenheiten der verschiedenen Gebäudeteile, wie Lage des Raums bzw. der Wohnung (Stockwerk, Ausrichtung zur Sonne), Raumnutzung, Beschattung durch Jalousien oder Vorhänge, sind die auf diese Weise bestimmten Werte sehr ungenau. Diese Methode gibt auch keine Möglichkeit, sich ändernde Gegebenheiten mit einzubeziehen. Es ist darüber hinaus nicht möglich, in Untereinheiten eine Abweichung vom normalen Heizungs- bzw. Kühlverhalten (Ausnahmesituationen oder Fehlerzustände) festzustellen, etwa einen großen Verlust an Heizenergie aufgrund mangelhafter Isolierung, defekter bautechnischer Elemente oder eines dauernd offenen Fensters.

DARSTELLUNG DER ERFINDUNG

Es ist daher eine Aufgabe der Erfindung, ein Verfahren zu schaffen, mit dem in einer Einheit, insbesondere einem Gebäude, die Bestimmung von Einzelverbräuchen der Untereinheiten, insbesondere von Gebäudeteilen, ohne Einbau zusätzlicher Messgeräte sichergestellt werden kann, wobei auch sich ändernde Gegebenheiten in den Untereinheiten betreffend den Heiz- bzw. Kühlenergieverbrauch berücksichtigt werden können.

Diese Aufgabe wird durch ein Verfahren nach Anspruch 1 gelöst. Anspruch 1 bezieht sich auf ein Verfahren zur Bestimmung des Verbrauchs an Heiz- oder Kühlenergie von zumindest einer baulichen Untereinheit einer größeren baulichen Einheit. Anspruch 1 löst die gestellte Aufgabe, indem erstens

- die Heiz- oder Kühlleistung der Einheit über die Zeit bestimmt wird,
- sowie der Zeitpunkt der Schaltereignisse mehrerer Untereinheiten, wobei die Schaltereignisse die Zufuhr von Heiz- oder Kühlmedium betreffen,
- sowie die Innentemperatur dieser Untereinheiten ,

und dass zweitens der Verbrauch an Heiz- oder Kühlenergie für diese Untereinheiten auf Basis dieser Daten bestimmt wird.

Mit anderen Worten betrifft die Erfindung einerseits ein Verfahren zur Bestimmung des Verbrauchs an Heizenergie von zumindest einer baulichen Untereinheit einer größeren baulichen Einheit, wobei erstens

- die Heizleistung der Einheit über die Zeit bestimmt wird,
- sowie der Zeitpunkt der Schaltereignisse mehrerer Untereinheiten, wobei die Schaltereignisse die Zufuhr von Heizmedium betreffen,
- sowie die Innentemperatur dieser Untereinheiten,

und dass zweitens der Verbrauch an Heizenergie für diese Untereinheiten auf Basis dieser Daten bestimmt wird.

Die Erfindung umfasst andererseits auch ein Verfahren zur Bestimmung des Verbrauchs an Kühlenergie von zumindest einer baulichen Untereinheit einer größeren baulichen Einheit, wobei erstens

- die Kühlleistung der Einheit über die Zeit bestimmt wird,
- sowie der Zeitpunkt der Schaltereignisse mehrerer Untereinheiten, wobei die Schaltereignisse die Zufuhr von Kühlmedium betreffen,
- sowie die Innentemperatur dieser Untereinheiten,

und dass zweitens der Verbrauch an Kühlenergie für diese Untereinheiten auf Basis dieser Daten bestimmt wird.

Es kann mit dem erfindungsgemäßen Verfahren der Energieverbrauch jener Untereinheiten ermittelt werden, von denen entsprechende Daten vorliegen, also zumindest der Zeitpunkt der Schaltereignisse und die Innentemperatur. Vorteilhaft ist, wenn diese Daten von allen Untereinheiten der Einheit vorhanden sind, weil dann der Verbrauch von Energie aller Untereinheiten bestimmt werden kann. Die Daten "Zeitpunkt der Schaltereignisse" und "Innentemperatur" liegen in der Regel bereits vor bzw. werden regelmäßig ermittelt, sodass diese Daten für das erfindungsgemäße Verfahren in dem Sinn bestimmt werden, dass diese nur mehr übernommen werden müssen, z.B. vom Automationssystem zur Regelung der Raumtemperatur.

Die folgenden Ausführungen betreffend die Heizenergie sind entsprechend auf Verfahren zur Bestimmung der Kühlenergie anwendbar. Das Heiz- oder Kühlmedium kann flüssig oder gasförmig sein.

Die vorliegende Erfindung bestimmt also etwa Einzelverbräuche von Untereinheiten (eines Stockwerks, einer Wohnung oder einer anderen Untereinheit) in einem Gebäude auf Basis des Heizenergie-Summenverlaufs (und/oder dessen zeitlicher Ableitung, des Leistungsverlaufs) für einen längeren historischen Zeitraum. Neben dem Summenverlauf der Einheit (etwa des Gebäudes) benötigt das Verfahren auch Informationen zu relevanten Schaltereignissen der Heizungsanlage der Einheit, also Schaltvorgänge betreffend die einzelnen Untereinheiten (z.B. die Schaltvorgänge in den einzelnen Wohnungen, Räumen, etc.), sowie den Verlauf der Innentemperaturen in den einzelnen Untereinheiten. Diese Informationen werden typischerweise durch Raumbediengeräte in Verbindung mit einem Automationssystem erfasst werden. Alternativ können diese Informationen leicht und kostengünstig durch nichtinvasive Sensorik erfasst werden, die auch nachträglich einfach und kostengünstig in einem Gebäude verbaut werden kann. Zum Überprüfen der Plausibilität der Innentemperaturen kann auch die Außentemperatur erfasst werden.

Das erfindungsgemäße Verfahren basiert auf der Tatsache, dass jeder Einzelverbrauch im Summenverbrauch enthalten ist. Durch Einbeziehen der Schalthandlungen der betreffenden Untereinheiten sowie des Temperaturverlaufs während der bzw. zwischen den Schalthandlungen kann bestimmt werden, welcher Anteil des Summenverbrauchs von einer bestimmten Untereinheit verbraucht wurde.

Eine erste Variante des erfindungsgemäßen Verfahrens sieht ein einfaches Modell mit einer linearen Schätzmethode vor. Entsprechend ist vorgesehen, dass der Verbrauch an Heiz- oder Kühlenergie für zumindest eine Untereinheit aufgrund einer linearen Gleichung für die Heiz- oder Kühlleistung SummeP der Einheit bestimmt wird, wobei erstens für jede der n Untereinheiten R1, R2, ..., Rn das Produkt aus

- der Temperaturdifferenz ΔTRn aus Vorlauftemperatur des Heiz- oder Kühlmediums und Raumtemperatur,
- einer Konstanten KRn, welche die relative abgegebene Heizleistung bzw. die relative aufgenommene Kühlleistung für diese Untereinheit widerspiegelt, und
- einer Konstanten Kges, welche die Heiz- bzw. Kühlleistung der gesamten Einheit widerspiegelt,

gebildet und gemäß folgender Formel aufsummiert wird: SummeP = ΔTR1*KR1*Kges + ΔTR2*KR2*Kges + ... + ΔTRn*KRn*Kges,

wobei zweitens die Konstanten KRn durch Addieren des zeitlichen Verlaufs der Heiz- bzw. Kühlleistung SummeP von verschiedenen Zeitintervallen, wo entsprechend den Schaltereignissen Heizenergie in die Untereinheit Rn abgegeben bzw. Kühlenergie aus der Untereinheit aufgenommen wird, und durch Vergleich des Ergebnisses mit der Heiz- bzw. Kühlleistung SummeP außerhalb der Zeitintervalle bestimmt wird.

Die Schätzmethode beruht auf der Annahme, dass sich nach dem Einschalten der Heizung (bzw. Kühlung) in einer Untereinheit (z.B. einem Raum) je nach Raumtemperatur und Vorlauftemperatur ein Anstieg (bzw. Abfall) der Raumtemperatur ergibt. Damit geht ein Anstieg des Gesamtleistungsverlaufs des gesamten Gebäudes einher, eben ausgelöst durch den Heizverlauf (bzw. Kühlverlauf) in der bestimmten Untereinheit.

Der Summenleistungsverlauf für das gesamte Gebäude ergibt sich zu einem Zeitpunkt aus der Summe der Einzelleistungsverläufe der Untereinheiten, wobei Heizleistung aus dem Heizsystem nur abgegeben wird, wenn die Heizung in dieser Untereinheit eingeschaltet ist (entsprechend wird Kühlleistung aus dem Kühlsystem nur verbraucht, wenn die Kühlung in dieser Untereinheit eingeschaltet ist). Im Falle einer Heizung mit flüssigem oder gasförmigem Heizmedium bedeutet dies etwa, dass die Ventile der Wärmeabgabeeinheit, z.B. des Heizkörpers, geöffnet sind. Der Verlauf der Einzelleistung einer Untereinheit ist abhängig von der Differenz aus Vorlauftemperatur des Heizmediums und Raumtemperatur, sowie von der maximalen Leistung der vom Heizmedium durchströmten Wärmeabgabeeinheit, z.B. des Heizkörpers oder einer Fußbodenheizung. Dieser Zusammenhang kann genutzt werden, um die Abhängigkeit der Heizleistung von der Temperaturdifferenz zu errechnen. Dazu fasst man die Abhängigkeit in zwei Konstanten zusammen: eine Konstante KRn ist abhängig vom der Untereinheit (z.B. dem Raum) selbst und spiegelt die relative abgegebene Heizleistung wider. Die andere Konstante Kges ist für die gesamte Einheit gleich und skaliert lediglich Temperaturdifferenz und Heizleistung. Der Summenverbrauch an Heizleistung oder Heizenergie der gesamten Einheit ist also die Summe der Produkte der Untereinheiten, gebildet aus der Temperaturdifferenz ΔT dieser Untereinheit, deren Konstante für die relative abgegebene Heizleistung und der Konstante Kges für die gesamte Einheit, also

$$\text{SummeP} = \Delta TR1*KR1*Kges + \Delta TR2*KR2*Kges + \ldots + \Delta TRn*KRn*Kges$$

Dabei beschreibt R1, R2, ... Rn die Anzahl der Untereinheiten, etwa Räume eines Gebäudes.

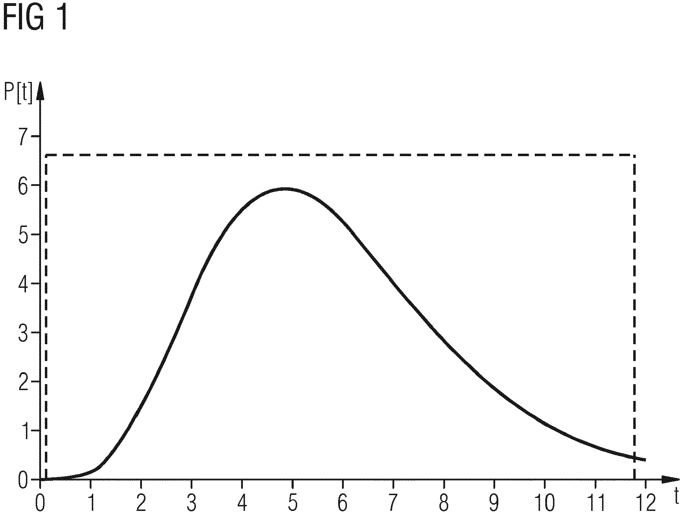

Um jetzt die Konstante KRn, welche die relative abgegebene Heizleistung für die Untereinheit Rn darstellt, für eine einzelne Untereinheit Rn zu bestimmen, kann man in einem längeren repräsentativen Testzeitraum für diese Untereinheit jene Zeitintervalle des Summenverlaufs SummeP der Heizleistung extrahieren, die mit dem Schaltereignis zur Zufuhr von Heizenergie beginnen und enden, wenn die Zufuhr von Heizenergie beendet wird. Beispielsweise kann das Zeitintervall dadurch bestimmt sein, wann das Ventil für die Wärmeabgabeeinheit dieser Untereinheit geöffnet war. In Fig. 1 ist ein typischer zeitlicher Verlauf PRn(t) der Heizleistung einer Untereinheit dargestellt. Strichliert dargestellt ist das sogenannte "Einschaltfenster", das dem Zeitintervall entspricht, welches sich an das Schaltereignis "Einschalten" anschließt und in der Regel mit dem Schaltereignis "Ausschalten" endet.

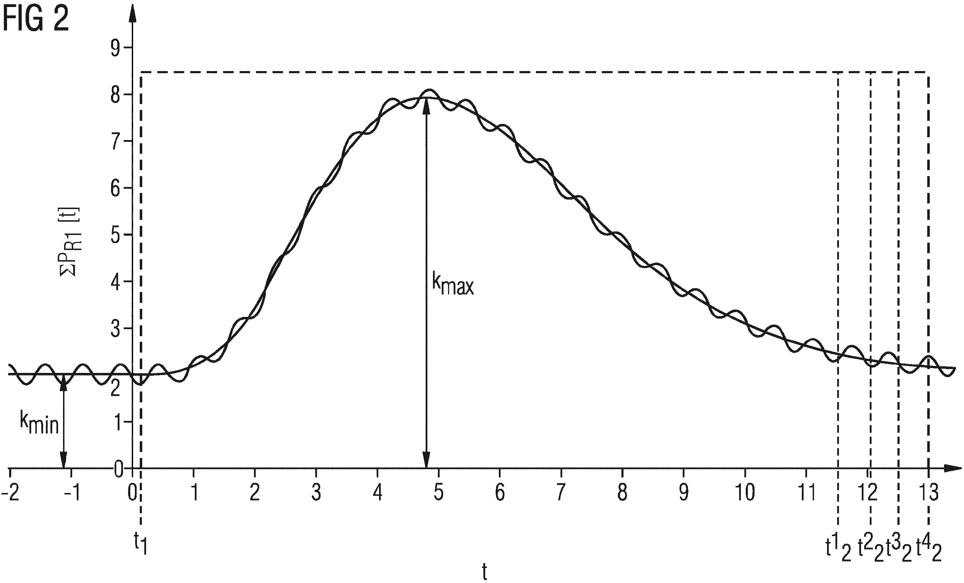

Summiert man nun die Summenverläufe der Heizleistung, synchronisiert um den Einschaltzeitpunkt bzw. das entsprechende Schaltereignis dieser Untereinheit, so hebt sich die Leistungsabgabe der jeweiligen Untereinheit aus dem Summenverlauf heraus. Summiert man genügend viele Leistungsverläufe und geht man davon aus, dass die Schaltereignisse aller Untereinheiten unabhängig von einander erfolgen, so ergibt sich eine mittlere Leistung der anderen Untereinheiten vor und nach dem Zeitintervall der betrachteten Einheit. Dies ist in Fig. 2 dargestellt.

Aus der Differenz der Minima und Maxima, indirekt gewichtet mit der Anzahl m an summierten Stücken des Summenverlaufs (welche den Zeitintervallen entsprechen, wo diese Untereinheit beheizt wird), ergibt sich die relative Konstante KRn für die betrachtete Untereinheit Rn:

$$KRn = (KmaxRn - KminRn)/m$$

Entsprechend kann vorgesehen sein, dass das Addieren des zeitlichen Verlaufs der Heiz- bzw. Kühlleistung SummeP von verschiedenen Zeitintervallen, wo entsprechend den Schaltereignissen Heizenergie in die Untereinheit Rn abgegeben bzw. Kühlenergie aus der Untereinheit aufgenommen wird, synchronisiert um das jeweilige Schaltereignis erfolgt, und sich die relative Konstante KRn für die betrachtete Untereinheit Rn aus dem, aus der Addition resultierenden, zeitlichen Verlauf ergibt, nämlich aus der Differenz des Minimums außerhalb der Zeitintervalle und des Maximums innerhalb der Zeitintervalle, indirekt gewichtet mit der Anzahl m an summierten Zeitintervallen:

$$KRn = (KmaxRn - KminRn)/m.$$

Zu beachten ist hier, dass Fehler aufgrund von atypischen Zeitintervallen verursacht werden können, etwa wenn im Winter während des Heizens ein Fenster geöffnet ist. Dies kann allerdings durch eine Gruppierung (mittels Clustering-Methoden oder anderer Data Mining Verfahren) der Innen- und Außentemperaturen erkannt werden und das betreffende Zeitintervall nicht in die Betrachtung mit einbezogen werden. Mit anderen Worten besteht eine Ausführungsform der Erfindung darin, dass die Außentemperatur außerhalb der Einheit bestimmt und aufgrund der Gruppierung (mittels Clustering-Methoden oder anderer Data Mining Verfahren) mit der Innentemperatur der Untereinheit atypische Zeitintervalle ausgeschieden werden.

Die Konstante KRn, welche die relative abgegebene Heizleistung für die Untereinheit Rn widerspiegelt, wird für alle anderen Untereinheiten R1, R2, ..., Rn entsprechend berechnet.

Die Konstante Kges ergibt sich aus dem Summenverbrauch an Heizleistung,

$$SummeP = \Delta TR1*KR1*Kges + \Delta TR2*KR2*Kges + … + \Delta TRn*KRn*Kges$$

sobald alle relativen Konstanten KRn bekannt sind. Für die Untereinheit Rn kann dann die Heizleistung PRn wie folgt berechnet werden:

$$PRn = \Delta TRn*KRn*Kges$$

woraus sich durch Integration über die Zeit der Energieverlauf ERn der Untereinheit berechnen lässt.

Da es sich bei der ersten Variante des erfindungsgemäßen Verfahrens um eine Berechnung mit beschränkten Informationen handelt, ist das Ergebnis mit Fehlern behaftet: ein Fehler ergibt sich aus der Linearisierung des Zusammenhangs zwischen abgegebener Heizleistung und der Temperaturdifferenz. Durch entsprechende Modellbildung kann dieser Fehler verringert werden. Allerdings stehen auch dann, wie bisher mit den Konstanten KRn und Kges, nur zwei Parameter - ein von der Untereinheit abhängiger und einer von der Untereinheit unabhängiger - zur Verfügung, die dann einen allenfalls nichtlinearen Zusammenhang parametrieren. Für alle darüber hinausgehenden Verbesserungen ist eine exakte Modellierung der Einheit (des Gebäudes) notwendig, siehe weiter unten bei der zweiten Variante des erfindungsgemäßen Verfahrens.

Zu beachten ist auch, dass sich der zeitliche Verlauf der abgegebenen Heizleistung vom zeitlichen Verlauf der gemessenen Heizleistung unterscheidet. Aus diesem Grund deckt sich der zeitliche Verlauf der Summe der berechneten Heizleistungen nicht mit dem gemessenen Summenverlauf der Heizleistung. Da diese Größen jedoch energetisch gleichwertig sind und im Wesentlichen der längerfristige Energieverlauf von Interesse ist, hat dieser Effekt keine Auswirkung.

Bei der ersten Variante des erfindungsgemäßen Verfahrens wird die an die Untereinheit abgegebene Heizleistung aus einer Differenz von Vorlauftemperatur und Raumtemperatur gebildet. Diese Werte stehen üblicherweise zur Verfügung und können andernfalls mit geringem Aufwand erhoben werden. Allerdings wird die Vorlauftemperatur in der Untereinheit durch Wärmeabgabe entsprechend reduziert. Diese Differenz aus Vorlauftemperatur und tatsächlicher Temperatur der Wärmeabgabeeinheit in der Untereinheit ist wieder geringfügig abhängig von der Raumtemperatur sowie von der Durchlaufgeschwindigkeit des Heizmediums durch die Wärmeabgabeeinheit (z.B. durch den Heizkörper oder die Fußbodenheizung). Während eine konstante, aber beliebige Temperaturdifferenz durch die Konstante KRn berücksichtigt wird, bleibt die Abhängigkeit von der Raumtemperatur unberücksichtigt. Aufgrund der Größenordnung der Differenz der Vorlauftemperatur und der Raumtemperatur einerseits und der zu erwartenden Schwankung der Temperatur der Wärmeabgabeeinheit andererseits kann dies vernachlässigt werden. Wird vorausgesetzt, dass die Durchlaufgeschwindigkeit des Heizmediums durch die Wärmeabgabeeinheit immer annähernd gleich ist, wenn das Heizungsventil offen ist, so ist dieser Faktor ebenfalls in der Konstante KRn enthalten.

Eine zweite Variante des erfindungsgemäßen Verfahrens sieht eine modellbasierte Lösung auf Basis von Machine Learning Methoden vor. Hierzu kann ein einfaches thermisches Modell der Einheit, etwa eines Gebäudes, erstellt werden, um das Heizverhalten mittels einer Simulation nachzustellen. Ergebnis der Simulation ist der Verlauf der Innentemperatur der einzelnen Einheiten, die Schalterstellung der einzelnen Einheiten sowie der Energieverbrauch der Untereinheit und der Einheit selbst.

Als Beispiel sei das Ergebnis einer Simulation eines Gebäudes mit zwei Räumen in Form einer Tabelle dargestellt, wobei die Ergebnisse sowohl zum Zeitpunkt t als auch zum Zeitpunkt t+1 dargestellt sind:

| Zeitpunkt | t | t+1 |
|---|---|---|
| Heizung Raum 1 | Ein | Aus |
| Heizung Raum 2 | Aus | Aus |
| Temperatur Raum 1 | 18,3 | 20,4 |
| Temperatur Raum 2 | 20,2 | 20,1 |
| Heizleistung Raum 1 [kW] | 0,4 | 0,0 |
| Heizleistung Raum 2 [kW] | 0,0 | 0,0 |
| Summe der Heizleistungen [kW] | 0,4 | 0,0 |
| Außentemperatur [°C] | 18,0 | 18,3 |

Diese Daten können verwendet werden, um ein weiteres Modell zu trainieren, das auf Basis der Innen- und Außentemperaturen, Schalterstellungen und der Summe der Heizleistungen den Energieverbrauch der einzelnen Untereinheiten in einem bestimmten Zeitraum schätzt. Solche weiteren Modelle könnten beispielsweise Random Forest Modelle oder Convolutional Neural Networks (CNN oder ConvNet) sein.

Input und Output für ein weiteres Modell sind in den beiden folgenden Tabellen skizziert:

Input für das weitere Modell:

| Zeitpunkt | t | t+1 |
|---|---|---|
| Heizung Raum 1 | Ein | Aus |
| Heizung Raum 2 | Aus | Aus |
| Temperatur Raum 1 | 18,3 | 20,4 |
| Temperatur Raum 2 | 20,2 | 20,1 |
| Summe der Heizleistungen [kW] | 0,4 | 0,0 |
| Außentemperatur [°C] | 18,0 | 18,3 |

Output des weiteren Modells:

| Zeitpunkt | t bis (t+1) |
|---|---|
| Heizleistung Raum 1 [kW] | 0,4 |
| Heizleistung Raum 2 [kW] | 0,0 |
| Summe der Heizleistungen [kW] | 0,4 |

Nach dem Training des weiteren Modells kann dieses für das reale Gebäude zur Abschätzung und Einordnung des raumspezifischen Energiebedarfs verwendet werden.

Entsprechend kann vorgesehen sein, dass ein thermisches Modell der Einheit erstellt wird, mit welchem

- die Heiz- oder Kühlleistung der Einheit über die Zeit bestimmt wird,

- sowie der Zeitpunkt der Schaltereignisse zumindest einer Untereinheit, wobei die Schaltereignisse die Zufuhr von Heiz- oder Kühlmedium betreffen,

- die Innentemperatur der Untereinheit,

- die Außentemperatur außerhalb der Einheit sowie

- der Verbrauch an Heiz- oder Kühlenergie für zumindest eine Untereinheit, und dass diese Daten verwendet werden, um ein weiteres Modell zu trainieren, das auf Basis der Innen- und Außentemperaturen, Schaltereignisse und der Heiz- oder Kühlleistung der Einheit die Heiz- oder Kühlleistung der einzelnen Untereinheiten in einem bestimmten Zeitraum abschätzt.

Auch bei dieser Variante des erfindungsgemäßen Verfahrens kann der daraus berechnete Energiebedarf bzw. der Bedarf an Heizleistung einen Fehler aufweisen, der aus den Modellen herrührt, was aber für eine grundsätzliche Abschätzung des Energiebedarfs nicht störend ist.

Im Zusammenhang mit dem erfindungsgemäße Verfahren, aber auch unabhängig davon, kann ein atypisches Heiz- bzw. Kühlverhalten von baulichen Untereinheiten einer größeren baulichen Einheit erkannt werden. Dazu kann vorgesehen werden, dass für zumindest eine Untereinheit viele Heiz- bzw. Kühlzeiträume mit unterschiedlichen Ausgangssituationen, umfassend zumindest Innentemperatur, Vorlauftemperatur des Heiz- bzw. Kühlmediums und Außentemperatur, erfasst werden, für jede Ausgangssituation eine zulässige Abweichung von der Heiz- bzw. Kühldauer festgelegt wird und eine Fehlermeldung für diese Untereinheit ausgegeben wird, wenn für diese Untereinheit bei einer Ausgangssituation die vorbestimmte Abweichung überschritten wird.

Man kann also ein atypisches Heiz- bzw. Kühlverhalten von baulichen Untereinheiten einer größeren baulichen Einheit erkennen, auf Basis der Außentemperatur, der Raumtemperaturen und des Schaltverhaltens der Untereinheiten (also der Ein- und Ausschaltzeitpunkte der Wärmeabgabeeinheiten bzw. Wärmeaufnahmeeinheiten). Bei vorgegebenem Heizverhalten, also etwa beim Halten der Raumtemperatur in einem bestimmten Temperaturbereich, beginnt der Heizvorgang (in der Regel mit einem Schaltereignis) nach Unterschreiten einer bestimmten Raumtemperatur, dem unteren Schwellwert. Der Heizvorgang dauert an, bis die Raumtemperatur auf einen vorgegebenen oberen Schwellwert angehoben worden ist. Danach endet der Heizvorgang (in der Regel wieder mit einem Schaltereignis). Die Dauer des Heizvorganges ist abhängig von der Vorlauftemperatur des Heizmediums, der Raumtemperatur sowie von externen Faktoren wie der Außentemperatur und/oder der Raumtemperatur in den angrenzenden Gebäudeteilen, wie in angrenzenden Räumen.

In der Regel sollte der Heizvorgang unter ähnlichen Bedingungen eine ähnliche Dauer aufweisen. Beispielsweise sollte die Erwärmung eines Raums beginnend beim unteren Schwellwert der Raumtemperatur bis zum oberen Schwellwert der Raumtemperatur bei gegebener Vorlauftemperatur des Heizmediums und bei gegebener Außentemperatur immer einen bestimmten Zeitraum

$$delta\_t = t + e$$

in Anspruch nehmen, wobei e einen Fehlerterm darstellt, der die Abweichung von t bei gleicher Ausgangssituation angibt. Das heißt, bei Wiederholung des Heizvorgangs bei derselben Ausgangssituation ergibt sich eine Verteilung von delta_t um t, wobei e die Form der Verteilung definiert.

Durch die Erfassung vieler Heizzeiträume mit unterschiedlichen Ausgangssituationen für eine einzelne Untereinheit kann nun für jede Ausgangssituation die entsprechende Verteilung des Heizzeitraums errechnet werden. Bei konstanter Heizstrategie der benachbarten Untereinheiten, also bei etwa gleichbleibenden Temperaturverhältnissen in den Nachbarräumen, ist der Wärmeeintrag durch die Wände in die betrachtete Untereinheit vernachlässigbar und muss daher im Modell nicht berücksichtigt werden. Es ist dann ausreichend, die Außentemperatur für die Berechnung der Verteilung heranzuziehen. Nach Erstellung dieser Verteilungen kann die Wahrscheinlichkeit der Verteilungszugehörigkeit neuer Heizzeiträume errechnet werden. Kann ein neuer Heizzeitraum nicht der entsprechenden Verteilung zugeordnet werden, spricht das für eine signifikante Veränderung des Fehlerterms e und damit für ein atypisches Verhalten der Untereinheit. Die Ursache hierfür kann etwa ein defekter Heizkörper oder Temperaturregler sein, oder ein geöffnetes oder eingeschlagenes Fenster.

Die Identifizierung von atypischem Verhalten stellt einen wichtigen Indikator für Gebäudeverwalter dar, um Gebäudebereiche, wie Räume, gezielt und frühzeitig zu überprüfen und Fehler am oder im Gebäude rechtzeitig zu erkennen und zu beheben.

Die Erfindung umfasst auch ein Computerprogrammprodukt, welches ein Programm umfasst und direkt in einen Speicher eines Rechners ladbar ist, mit Programm-Mitteln, um alle Schritte des erfindungsgemäßen auszuführen, wenn das Programm vom Rechner ausgeführt wird. Das Computerprogramm umfasst also die Schritte, dass

- die Heiz- oder Kühlleistung der Einheit über die Zeit bestimmt wird (etwa auf Basis von bereits erfolgten Messungen) oder die bereits bestimmten Werte der Heiz- oder Kühlleistung eingelesen werden (welche etwa schon vorher aus Messwerten berechnet worden sind),
- dass der Zeitpunkt der Schaltereignisse mehrerer Untereinheiten, wobei die Schaltereignisse die Zufuhr von Heiz- oder Kühlmedium betreffen, bestimmt werden (etwa durch Auslesen von Raumtemperaturreglern) oder die bereits bestimmten Zeitpunkte eingelesen werden (etwa aus dem Automationssystem der Einheit, das über die Daten der Raumtemperaturregler verfügt),
- dass die Innentemperatur dieser Untereinheiten bestimmt (etwa durch Auslesen entsprechender Sensoren) oder die bereits bestimmten Innentemperaturen eingelesen werden (etwa aus dem Automationssystem der Einheit, das über die Daten der Raumtemperatursensoren verfügt),

und dass zweitens der Verbrauch an Heiz- oder Kühlenergie für zumindest eine dieser Untereinheiten auf Basis dieser Daten bestimmt wird.

Die gegenständliche Erfindung beschreibt eine nichtinvasive Methode zur Bestimmung von Energieflüssen, welche Methode zur Gebäudeoptimierung verwendet werden kann.

Durch das erfindungsgemäße Verfahren ist es möglich, den Energieverbrauch eines Heizungs- oder Kühlungssystems zu ermitteln, mit minimalem Einsatz von Messtechnik. Um den Energieverbrauch in jedem Raum eines Gebäudes auf konventionelle Art zu ermitteln, würde es zwei Temperatursensoren und einen Durchflusssensor pro Raum benötigen. Neben sehr hohem Aufwand für Beschaffung und Installation kommen noch Betriebs- und Wartungsaufwand dazu. Eine nachträgliche Installation in Bestandsgebäuden ist daher kaum machbar und birgt Risiken betreffend das bestehende Heizungs- oder Kühlungssystem.

Erfindungsgemäß sind pro Untereinheit nur ein Temperatursensor nötig, sowie mindestens ein Element (z.B. ein Ventil) zur Erfassung der Schaltereignisse (z.B. der Ventilstellungen). Aus den Betriebsdaten des Heizungs- bzw. Kühlungssystems sind die Vorlauftemperatur des Heiz- bzw. Kühlmediums und der Gesamtenergieverbrauch bekannt, oder können sonst auf einfache messtechnische Art ermittelt werden.

KURZE BESCHREIBUNG DER FIGUREN

Zur weiteren Erläuterung der Erfindung wird im nachfolgenden Teil der Beschreibung auf die Figuren Bezug genommen, aus der weitere vorteilhafte Einzelheiten und mögliche Einsatzgebiete der Erfindung zu entnehmen sind. Die Figur ist als beispielhaft zu verstehen und soll den Erfindungscharakter zwar darlegen, ihn aber keinesfalls einengen oder gar abschließend wiedergeben. Es zeigt:

Fig. 1    einen zeitlichen Verlauf der Heizleistung einer Untereinheit,

Fig. 2    eine Überlagerung des zeitlichen Verlaufs der Heizleistung der Einheit.

WEGE ZUR AUSFÜHRUNG DER ERFINDUNG

In Fig. 1 ist mit P(t) ein typischer zeitlicher Verlauf PRn(t) der Heizleistung einer Untereinheit dargestellt. Strichliert dargestellt ist das sogenannte "Einschaltfenster", das dem Zeitintervall entspricht, welches sich an das Schaltereignis "Einschalten" anschließt und in der Regel mit dem Schaltereignis "Ausschalten" endet. Das Einschaltfenster entspricht also einem Heizintervall.

In Fig. 2 ist eine Überlagerung des zeitlichen Verlaufs der gesamten Heizleistung der Einheit dargestellt. Es werden also aus dem zeitlichen Verlauf der gesamten Heizleistung der Einheit Zeitintervalle herausgeschnitten, welche die Heizvorgänge einer bestimmten Untereinheit, hier R1, enthalten, und etwas darüber hinausgehen. Die Heizleistung dieser Zeitintervalle wird dann so summiert, dass sich jeweils der Beginn der Heizintervalle mit dem Beginn der anderen Heizintervalle deckt. Dieser Zeitpunkt ist in Fig. 2 mit t1 bezeichnet. Die Länge der Heizintervalle kann unterschiedlich sein, deren Ende ist jeweils mit t2 beschriftet. Die resultierende Summe der Heizleistungen ist in Fig. 2 als $\sum PR1(t)$ bezeichnet.

Vor dem Heizintervall, also vor t1, ergibt die Kurve eine mittlere Leistung der anderen Untereinheiten R2, R3, ..., Rn. Diese mittlere Leistung wird als bereits beschriebenes Minimum KminR1 herangezogen. Die höchste Leistung innerhalb der Heizintervalle von R1 wird als Maximum KmaxR1 verwendet. Mit der Anzahl m der Zeitintervalle, die für Fig. 2 aufsummiert wurden, kann dann die Konstante

$$KR1 = (KmaxR1 - KminR1)/m$$

berechnet werden.

**Patentansprüche**

1. Verfahren zur Bestimmung des Verbrauchs an Heiz- oder Kühlenergie von zumindest einer baulichen Untereinheit einer größeren baulichen Einheit, **dadurch gekennzeichnet, dass** erstens

   - die Heiz- oder Kühlleistung der Einheit über die Zeit bestimmt wird,
   - sowie der Zeitpunkt (t1, t2) der Schaltereignisse mehrerer Untereinheiten (R1), wobei die Schaltereignisse die Zufuhr von Heiz- oder Kühlmedium betreffen,
   - sowie die Innentemperatur dieser Untereinheiten (R1), und dass zweitens der Verbrauch an Heiz- oder Kühlenergie (P(t)) für zumindest eine dieser Untereinheiten (R1) auf Basis dieser Daten bestimmt wird.

2. Verfahren nach Anspruch 1, **dadurch gekennzeichnet, dass** der Verbrauch an Heiz- oder Kühlenergie für zumindest eine Untereinheit (R1) aufgrund einer linearen Gleichung für die Heiz- oder Kühlleistung SummeP der Einheit bestimmt wird,
   wobei erstens für jede der n Untereinheiten R1, R2, ..., Rn das Produkt aus

   - der Temperaturdifferenz ∆TRn aus Vorlauftemperatur des Heiz- oder Kühlmediums und Raumtemperatur,
   - einer Konstanten KRn, welche die relative abgegebene Heizleistung bzw. die relative aufgenommene Kühlleistung für diese Untereinheit (R1) widerspiegelt, und
   - einer Konstanten Kges, welche die Heiz- bzw.

   Kühlleistung der gesamten Einheit widerspiegelt, gebildet und gemäß folgender Formel aufsummiert wird:

$$\texttt{SummeP = \Delta TR1*KR1*Kges + \Delta TR2*KR2*Kges + ... +}$$
$$\texttt{\Delta TRn*KRn*Kges,}$$

   wobei zweitens die Konstanten KRn durch Addieren des zeitlichen Verlaufs der Heiz- bzw. Kühlleistung SummeP von verschiedenen Zeitintervallen, wo entsprechend den Schaltereignissen Heizenergie in die Untereinheit Rn abgegeben bzw. Kühlenergie aus der Untereinheit aufgenommen wird, und durch Vergleich des Ergebnisses mit der Heiz- bzw. Kühlleistung SummeP außerhalb der Zeitintervalle bestimmt wird.

3. Verfahren nach Anspruch 2, **dadurch gekennzeichnet, dass** das Addieren des zeitlichen Verlaufs der Heiz- bzw. Kühlleistung SummeP von verschiedenen Zeitintervallen, wo entsprechend den Schaltereignissen Heizenergie in die Untereinheit Rn abgegeben bzw. Kühlenergie aus der Untereinheit aufgenommen wird, synchronisiert um das jeweilige Schaltereignis erfolgt, und sich die relative Konstante KRn für die betrachtete Untereinheit Rn aus dem, aus der Addition resultierenden, zeitlichen Verlauf ($\sum$PR1(t))ergibt, nämlich aus der Differenz des Minimums (Kmin) außerhalb der Zeitintervalle und des Maximums (Kmax) innerhalb der Zeitintervalle, indirekt gewichtet mit der Anzahl m an summierten Zeitintervallen:

$$\texttt{KRn = (KmaxRn - KminRn)/m.}$$

4. Verfahren nach Anspruch 2 oder 3, **dadurch gekennzeichnet, dass** die Außentemperatur außerhalb der Einheit bestimmt und aufgrund von Gruppierung mit der Innentemperatur der Untereinheit atypische Zeitintervalle ausgeschieden werden.

5. Verfahren nach Anspruch 1, **dadurch gekennzeichnet, dass** ein thermisches Modell der Einheit erstellt wird, mit welchem

   - die Heiz- oder Kühlleistung der Einheit über die Zeit bestimmt wird,
   - sowie der Zeitpunkt (t1, t2) der Schaltereignisse zumindest einer Untereinheit (R1), wobei die Schaltereignisse die Zufuhr von Heiz- oder Kühlmedium betreffen,
   - die Innentemperatur der Untereinheit (R1),
   - die Außentemperatur außerhalb der Einheit sowie
   - der Verbrauch an Heiz- oder Kühlenergie für zumindest eine Untereinheit (R1), und dass diese Daten verwendet werden, um ein weiteres Modell zu trainieren, das auf Basis der Innen- und Außentemperaturen, Schaltereignisse und der Heiz- oder Kühlleistung der Einheit die Heiz- oder Kühlleistung der einzelnen Untereinheiten in einem bestimmten Zeitraum abschätzt.

6. Verfahren nach einem der vorhergehenden Ansprüche,
**dadurch gekennzeichnet, dass** für zumindest eine Untereinheit viele Heiz- bzw. Kühlzeiträume mit unterschiedlichen Ausgangssituationen, umfassend zumindest Innentemperatur, Vorlauftemperatur des Heiz- bzw. Kühlmediums und Außentemperatur, erfasst werden, für jede Ausgangssituation eine zulässige Abweichung von der Heiz- bzw. Kühldauer festgelegt wird und eine Fehlermeldung für diese Untereinheit ausgegeben wird, wenn für diese Untereinheit bei einer Ausgangssituation die vorbestimmte Abweichung überschritten wird.

7. Computerprogrammprodukt, welches ein Programm umfasst und direkt in einen Speicher eines Rechners ladbar ist, mit Programm-Mitteln, um alle Schritte des Verfahrens nach einem der Ansprüche 1 bis 6 zu veranlassen, wenn das Programm vom Rechner ausgeführt wird.

FIG 1

FIG 2

**Europäisches Patentamt**
**European Patent Office**
**Office européen des brevets**

# EUROPÄISCHER RECHERCHENBERICHT

Nummer der Anmeldung

EP 18 18 5735

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2016 212208 A1 (RHEINISCH-WESTFÄLISCHE TECHNISCHE HOCHSCHULE AACHEN [DE]) 11. Januar 2018 (2018-01-11) * Absätze [0008] - [0035]; Abbildung 1 * | 1-6 | INV. G06Q50/06 G06Q10/04 H04L12/28 G05D23/19 G01K17/06 |
| A | US 2013/124123 A1 (PATEL SHWETAK N [US] ET AL) 16. Mai 2013 (2013-05-16) * Absätze [0028] - [0033], [0065], [0087] - [0092] * | 1,6 | |
| A | WO 2017/064492 A1 (BRITISH GAS TRADING LTD [GB]) 20. April 2017 (2017-04-20) * Seite 3 - Seite 7 * * Seite 13, Zeile 21 - Zeile 31 * * Seite 17, Zeile 18 - Seite 19, Zeile 15 * * Seite 23; Abbildung 2 * | 1,6 | |
| X | DE 10 2011 015699 B3 (MESTECHNIK GES M B H & CO KG ENERGIEVERRECHNUNG CONTRACTING FACILITY M) 20. September 2012 (2012-09-20) * Absätze [0002], [0010] - [0022] * | 1,6 | RECHERCHIERTE SACHGEBIETE (IPC) G06Q H04L G05D G01K |

Der vorliegende Recherchenbericht wurde für alle Patentansprüche erstellt

| Recherchenort | Abschlußdatum der Recherche | Prüfer |
|---|---|---|
| München | 23. Oktober 2018 | Hopper, Eva |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 18 5735

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-10-2018

| Im Recherchenbericht angeführtes Patentdokument | Datum der Veröffentlichung | Mitglied(er) der Patentfamilie | Datum der Veröffentlichung |
|---|---|---|---|
| DE 102016212208 A1 | 11-01-2018 | DE 102016212208 A1<br>EP 3267629 A1 | 11-01-2018<br>10-01-2018 |
| US 2013124123 A1 | 16-05-2013 | US 2009072985 A1<br>US 2012092142 A1<br>US 2013124123 A1<br>US 2016154043 A1 | 19-03-2009<br>19-04-2012<br>16-05-2013<br>02-06-2016 |
| WO 2017064492 A1 | 20-04-2017 | EP 3362957 A1<br>EP 3362958 A1<br>GB 2543321 A<br>GB 2543629 A<br>US 2018285988 A1<br>US 2018301902 A1<br>WO 2017064492 A1<br>WO 2017064494 A1 | 22-08-2018<br>22-08-2018<br>19-04-2017<br>26-04-2017<br>04-10-2018<br>18-10-2018<br>20-04-2017<br>20-04-2017 |
| DE 102011015699 B3 | 20-09-2012 | AT 511222 A2<br>DE 102011015699 B3<br>SI 23703 A | 15-10-2012<br>20-09-2012<br>30-10-2012 |

EPO FORM P0461

Für nähere Einzelheiten zu diesem Anhang : siehe Amtsblatt des Europäischen Patentamts, Nr.12/82